# EUROPEAN PATENT SPECIFICATION

(11) **EP 2 506 554 B1**
(45) Date of publication and mention of the grant of the patent: **26.04.2017**
(21) Application number: 12162090.0
(22) Date of filing: 29.03.2012
(51) Int. Cl.: H04N 1/203, H04N 1/00

(54) **Method and device for scanning a saddle-stitched document**
Verfahren und Vorrichtung zur Abtastung Sattelgeheftetes Dokumentes
Procédé et dispositif pour numériser un document agraphé à cheval

(30) Priority: 01.04.2011 JP 2011082073; 02.03.2012 JP 2012046446
(43) Date of publication of application: 03.10.2012
(73) Proprietor: Konica Minolta Business Technologies, Inc., Chiyoda-ku Tokyo 100-0005 (JP)
(72) Inventor: Umeno, Hideyuki, Tokyo 100-0005 (JP)
(74) Representative: Hoffmann Eitle

(56) References cited:
- JP-A- 8 297 732
- JP-A- 2010 119 063

## Description

### BACKGROUND OF THE INVENTION

### Field of the Invention

The present invention relates to document reading devices, methods for controlling the same, and image forming devices, and in particular, to a document reading device for reading images of a saddle-stitched document, a method for controlling the same, and an image forming device.

### Description of the Related Art

Conventionally, various techniques for reading images of a saddle-stitched document have been proposed. A saddle-stitched document or a saddle-stitch document refers to a document having images printed thereon such that a plurality of paper leaves folded in the middle are formed into a booklet or a brochure by binding along the folding margin as a binding margin, and contents for two pages are printed on either side of each leaf.

For instance, Document 1 (Japanese Laid-Open Patent Publication No. 2010-119063) discloses a technique for unbinding a document in saddle-stitch printing by removing staples, setting leaves of the document on an ADF (Auto Document Feeder), reading images of the leaves, and laying out data of the read images as shown in the document. According to this technique described in the publication, information such as how many leaves are to be read and whether the document is to be left-hand/right-hand is inputted and accepted in association with the read images. Further, according to this technique, a preview of an image on a first leaf of the document that has been read is displayed, and a user is caused to select how many leaves are to be read and whether a plane from which the reading of the saddle-stitch document is started is a plane of a front cover/back cover or a plane therebetween.

However, the conventional technique requires cumbersome work of unbinding the document by removing the staples and then setting the unbound document on the ADF in order to have the saddle-stitched document read. In particular, there is a problem that the leaves in the document after the staples for saddle-stitching have been removed cannot be bound again using a common stapler that the user most likely owns. There is also a problem that with a method of opening the saddle-stitched document without unbinding and placing at a read position on a platen glass to read, it is necessary to repeat the reading more than once, which is cumbersome.

### SUMMARY OF THE INVENTION

The present invention has been contrived in view of the above circumstances, and aims to facilitate reading of a saddle-stitched document using an ADF.

In order to achieve the above mentioned objects, according to the present invention there is provided a document reading device and method as defined in the appended claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a specific example of a device configuration of a document reading device according to this embodiment.
Fig. 2 is a block diagram illustrating a specific example of a control configuration of the document reading device shown in Fig. 1.
Figs. 3 to 8 are views for illustration of reconstruction of images read from a saddle-stitch document in the document reading device shown in Fig. 1.
Fig. 9 is an enlarged view of the document reading device shown in Fig. 1 focusing a portion near a tray.
Fig. 10 illustrates how rollers are driven when a document is sent out to a transfer route near the tray of the document reading device shown in Fig. 1.
Fig. 11 is an enlarged view of the document reading device shown in Fig. 1 focusing a portion near the tray.
Fig. 12 is a flowchart of a document reading process executed in the document reading device shown in Fig. 1.
Fig. 13 illustrates one example of a screen shown in a display panel in the document reading process.
Fig. 14 illustrates another example of the screen shown in the display panel in the document reading process.
Figs. 15 to 17 are views for illustration of operations of the rollers in the document reading device shown in Fig. 1.
Fig. 18 is a block diagram illustrating a specific example of a control configuration of a modified example of the document reading device shown in Fig. 1.
Fig. 19 is a flowchart of a modified example of a document transfer process shown in Fig. 12.
Fig. 20 illustrates a modified example of the document reading device shown in Fig. 1.
Fig. 21 illustrates one example of an image forming device according to the present invention.

### DESCRIPTION OF THE PREFERRED EMBODIMENTS

An embodiment of the present invention will be now described with reference to the drawings. In the following description, like components are denoted by like reference symbols. Like names and functions are also used for these components. Therefore, detailed descriptions for these components will not be repeated.

### <Device Configuration>

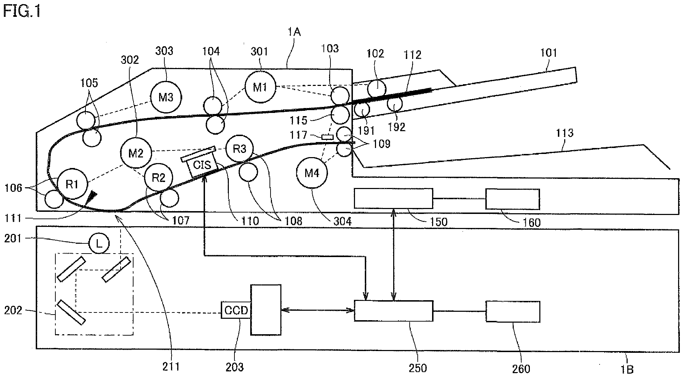

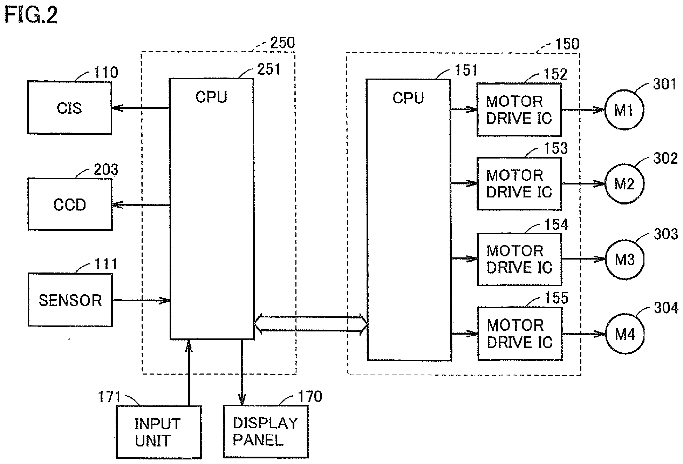

Fig. 1 illustrates a specific example of a device configuration of a document reading device according to this embodiment. Fig. 2 is a block diagram illustrating a specific example of a control configuration of the document reading device according to this embodiment.

Referring to Figs. 1 and 2, the document reading device according to the embodiment includes a sheet-through ADF (Auto Document Feeder) unit 1A and a reader unit 1B.

ADF unit 1A sends a document to a read position 211 at which one side of the document is read by reader unit 1 B, and sends the document to a reader 110 provided within ADF unit 1A and for reading the other side of the document.

ADF unit 1 A is provided with a tray 101 for containing the document to be fed, and a tray 113 for receiving the document that has been fed, and a transfer route for a document is provided between tray 101 and tray 113.

In a boundary area between tray 101 and the transfer route, a pickup roller 102, a paper feed roller 103, and a separation roller 115 are provided. A document stack 112 on tray 101 is fed by pickup roller 102, and a single document sheet is separated from the document stack by paper feed roller 103 and separation roller 115 and sent to the transfer route.

In the following description, a tray 101 side of a transfer direction along the transfer route, that is, a direction from tray 101 toward tray 113 is also referred to as an "upstream side in the transfer direction", and a tray 113 side of this direction is also referred to as a "downstream side in the transfer direction". Alternatively, the upstream side of the transfer route is also referred as "front", and the downstream side of the transfer route is also referred as "back".

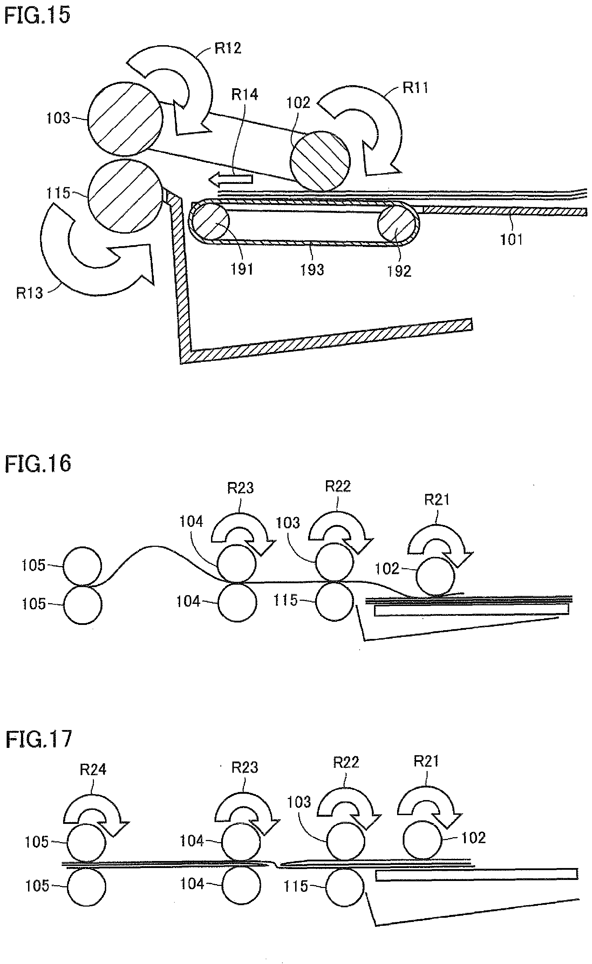

A pair of intermediate rollers 104 and a pair of registration rollers 105 are provided along the transfer direction. Both pairs sandwich the transfer route. The document that has been transferred to registration rollers 105 along the transfer route by intermediate rollers 104 is subjected to skew correction by registration rollers 105, as shown in Fig. 16. In Fig. 16, R21 to R23 indicate rotational directions of pickup roller 102, paper feed roller 103, separation roller 115, and intermediate rollers 104, respectively. Then, the document after the skew correction is further transferred to read position 211 of reader unit 1B.

In the transfer route, a pair of read rollers 106 and a pair of read rollers 107 are provided respectively on the upstream side and the downstream side of a portion corresponding to read position 211 of reader unit 1B. Due to rotation of the roller pairs, the transferred document is further transferred downstream passing through read position 211 of reader unit 1B. With this, a side of the document facing reader unit 1B is read by reader unit 1B. In the following description, the side of the transferred document facing reader unit 1B is also referred to as a "front surface" and the other side of the document is also referred to as a "back surface".

Reader 110 is provided along the transfer route on the further downstream side from read rollers 107. Reader 110 includes an imaging unit facing the back surface of the transferred document. A pair of read rollers 108 are provided on the downstream side from reader 110. Due to rotation of read rollers 107 and 108, the transferred document is further transferred downstream passing through reader 110.

One example of reader 110 provided within ADF unit 1 A is a reader employing a CIS (Contact Image Sensor). Specifically, reader 110 includes a light source that is not depicted and a CMOS (Complementary Metal Oxide Semiconductor) sensor that are positioned facing the back surface of the transferred document. A part of light applied from the light source is reflected on a side that faces the light source of the document to pass through the read position and received by the CMOS sensor, and light reception signals R, G, and B are converted into RGB data. With this, the back surface of the document is read by reader 110. Reader 110 is electrically connected to a control device 250 of reader unit 1B that will be later described, and outputs the RGB data as a reading result to control device 250. In the following description, reader 110 is also referred to as CIS 110. Further, in the following description, read rollers 106, 107, and 108 are also referred to as an R1 roller, an R2 roller, an R3 roller, respectively.

In a boundary area between the transfer route and tray 113, paper exit rollers 109 are provided. Due to rotation of paper exit rollers 109, the transferred document whose back surface has been read by CIS 110 exits to tray 113.

ADF unit 1A is further provided with a paper feed motor 301, a read motor 302, a registration motor 303, and a paper exit motor 304, as motors driving the rollers. In the following description, paper feed motor 301, read motor 302, registration motor 303, and paper exit motor 304 are also referred to as motors M1, M2, M3, and M4.

Paper feed motor 301 is connected to pickup roller 102 and paper feed roller 103 via an undepicted paper feed clutch, and drives these rollers.

Paper feed motor 301 is also connected to one of the pair of intermediate rollers 104 and drives the roller, and the other of intermediate rollers 104 rotates following the driven roller.

Registration motor 303 is connected to one of the pair of registration rollers 105 and drives the roller, and the other of registration rollers 105 rotates following the driven roller.

Read motor 302 is connected to one of the pair of read rollers 106, one of the pair of read rollers 107, and one of the pair of read rollers 108, and drives these rollers. The other of each pair of read rollers 106, 107, or 108 rotates following the corresponding driven roller.

Paper exit motor 304 is connected to one of the pair of paper exit rollers 109 and drives the roller. The other of paper exit rollers 109 rotates following the driven one of paper exit rollers 109.

Paper exit motor 304 is also connected to separation roller 115 via a rotational direction switching mechanism 117. Further, separation roller 115 includes an undepicted torque limiter, and is provided with a separation function of feeding a document sheet one by one.

The torque limiter is an undepicted tubular component that couples separation roller 115 to its driving shaft. When the torque of separation roller 115 is lower than the setting, that is, when only a single document sheet is sandwiched between paper feed roller 103 and separation roller 115, the driving shaft and separation roller 115 are decoupled and separation roller 115 rotates following paper feed roller 103. By contrast, when the torque of separation roller 115 is higher than the setting, that is, when more than one document sheet is sandwiched between paper feed roller 103 and separation roller 115, the driving shaft and separation roller 115 are coupled and separation roller 115 rotates in a direction sending the document sheets backward instead of following paper feed roller 103.

A sensor 111 for detecting the presence of the document is provided at any position along the transfer route. The position at which sensor 111 is provided is preferably located on the upstream side of read position 211, and an example is a position near read rollers 106 (the downstream side of read rollers 106 in Fig. 1).

As another example, the sensor can be located on the upstream side of read rollers 106. Examples of sensor 111 include a transmissive sensor. Sensor 111 is electrically connected to control device 250 of reader unit 1B that will be later described, and outputs a sensor signal to control device 250 when there is a document present within a range of detection.

ADF unit 1A is further provided with a control device 150 and a memory 160. A CPU 151 (Central Processing Unit) included in control device 150 reads and executes a program stored in memory 160. Each of motors M1 to M4 is electrically connected to control device 150, and controls the rotation according to a control signal from control device 150.

Reader unit 1 B, for example, includes a CCD (Charged Coupled Device). In this case, reader unit 1B is provided with an exposure lamp (L) 201, a mirror group 202 including a plurality of mirrors, a CCD sensor 203 as the reader, control device 250, and memory 260.

Upon passing of the document through read position 211, exposure lamp (L) 201 applies the front surface of the document. The light produced by the applied light reflecting on the front surface of the document is reflected on mirror group 202, directed to CCD sensor 203, and received by CCD sensor 203.

Control device 250 includes a CPU 251, and serves as an image processor by reading and executing a program stored in memory 260. CCD sensor 203 performs photoelectric conversion of a received signal into RGB data, and outputs the RGB data to control device 250. Control device 250 serving as an image processor generates image data based on the RGB data outputted from CIS 110 and CCD sensor 203, and causes memory 260 to store the generated image data.

At a portion near paper feed roller 103 of tray 101, drums 191 and 192 are provided.

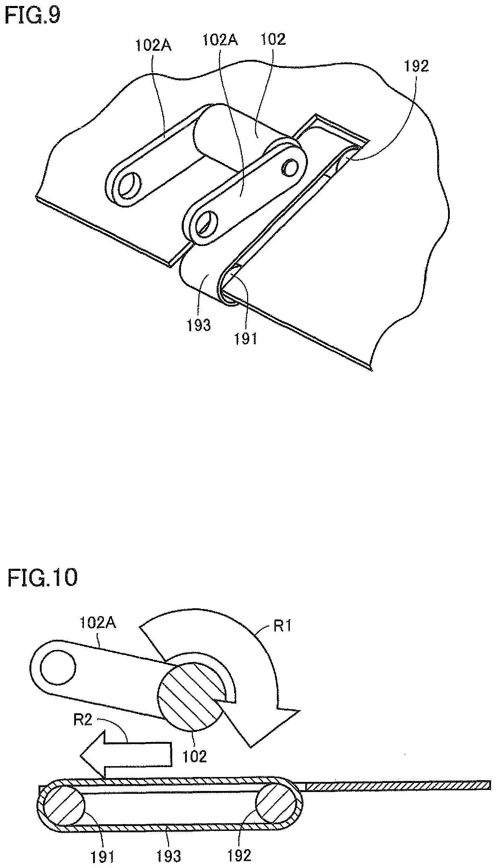

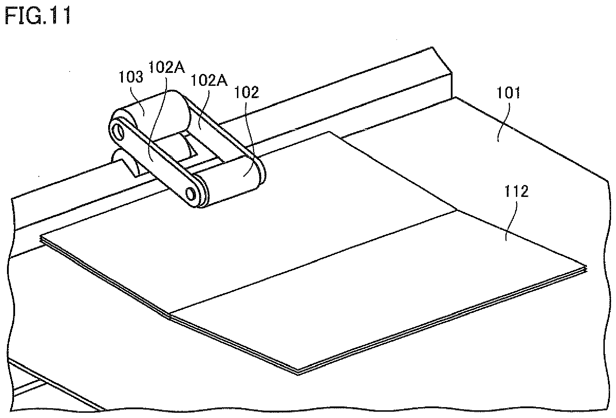

Fig. 9 is an enlarged view of the document reading device shown in Fig. 1 focusing a portion near tray 101. Further, Fig. 10 illustrates how the rollers are driven when the document is sent out to the transfer route near tray 101. Moreover, Fig. 11 is an enlarged view of the document reading device shown in Fig. 1 focusing the portion near tray 101.

Referring further to Figs. 9 to 11, tray 101 is provided with a belt 193 at a position slightly above a paper feed plane of tray 101. Belt 193 is suspended between drum 191 and drum 192. Further, Figs. 9 and 10 illustrate supporting unit 102A that supports pickup roller 102.

Pickup roller 102 rotates in a direction indicated by an arrow R1 in order to send the document to the transfer route.

As will be described later, operation modes of the document reading device according to this embodiment include a single-sheet document mode in which reading of a single-sheet document is performed and a saddle-stitched document mode in which reading of a saddle-stitched document is performed.

In the operation in the saddle-stitched document mode, belt 193 rotates at the same time as pickup roller 102 in a direction of transferring a document (indicated by an arrow R2) so as to send a saddle-stitched document to the transfer route smoothly. By contrast, in the single-sheet document mode, belt 193 does not rotate and remains unmoved. This is because the rotation of belt 193 when reading a single-sheet document is envisaged to damage this document. Belt 193 rotates as drums 191 and 192 are caused to rotate by the driving of the undepicted motor. Preferably, belt 193 is made of a material that can generate a predetermined degree of friction with the document, such as rubber material. Instead of belt 193, a roller whose surface in contact with the document is made of the material as described above can also be provided. However, providing the belt increases an area of contact with the document, and whereby the document can be sent to the transfer route more reliably.

Rotational operations of pickup roller 102 and belt 193 (drums 191 and 192) thus configured are controlled by CPU 151.

Referring to Fig. 2, control device 150 of ADF unit 1A includes CPU 151 and executes the program stored in memory 160, and control device 250 of reader unit 1B includes CPU 251 and executes the program stored in memory 260. CPU 151 of ADF unit 1 A and CPU 251 of reader unit 1B are electrically connected, and communicate control information, such as information on the size of the document, the operation mode, and timing information for reading the document, with each other.

CPU 151 of ADF unit 1 A is connected to a motor drive IC152 for driving paper feed motor (M1) 301, a motor drive IC153 for driving read motor (M2) 302, a motor drive IC154 for driving registration motor (M3) 303, and a motor drive IC 155 for driving paper exit motor (M4) 304. CPU 151 inputs an excitation signal to motor drive IC, thereby controlling the rotation of the motor.

CPU 251 of reader unit 1B is connected to a sensor 111, and a sensor signal is inputted from sensor 111. CPU 251 of reader unit 1B is further connected to CIS 110 and CCD sensor 203. By executing a process that will be described later, CPU 251 determines a position of the document along the transfer route based on the sensor signal from sensor 111, and determines timing of reading by CIS 110 and CCD sensor 203 using the determined position. Further, CPU 251 controls the timing of reading by CIS 110 and CCD sensor 203.

As used herein, CCD sensor 203 is referred to as a first reader, and CIS 110 is referred to as a second reader, as needed.

Further, CPU 251 of reader unit 1B serves as an image processor by reading and executing the program stored in memory 260. CPU 251 as an image processor accepts an input of RGB data from CIS 110 and an input of RGB data from CCD sensor 203, processes the inputted RGB data to generate image data, and causes memory 260 to store the generated image data.

Moreover, as described above, the document reading device is provided with the motor for driving drums 191 and 192. CPU 151 drives this motor accordingly by means of a driving circuit.

Furthermore, the document reading device includes a display panel 170 configured by such as a liquid crystal display device and an input unit 171 configured by such as various buttons. When input unit 171 is operated, information corresponding to this operation is inputted to CPU 251. Further, CPU 251 controls a display mode of display panel 170. In this embodiment, input unit 171 is realized as software keys displayed in display panel 170. Specifically, according to this embodiment, the document reading device is provided with a touch panel as one example of display panel 170 and input unit 171.

### <Reading and Reconstructing Saddle-Stitch Document>

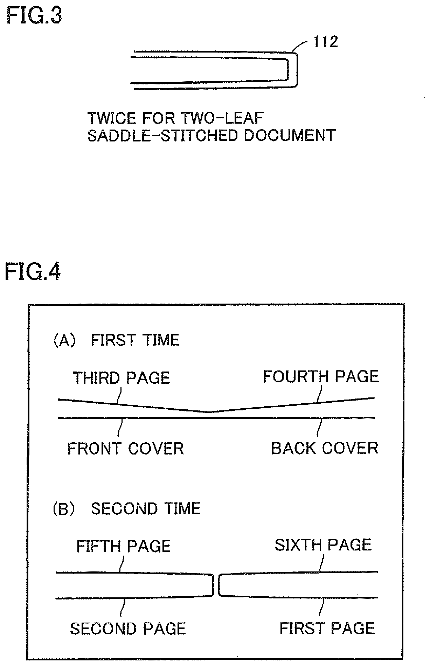

A program for reconstructing images read from a saddle-stitch document is now described with reference to Figs. 3 to 8. Such a program is stored in memory 260, and executed by CPU 251. As used herein, the reconstruction refers to an operation of reading image data for all leaves included in a saddle-stitch document, each leaf having an image for two pages on either side, having the read image data be stored in memory 260, and causing CPU 251 to rearrange images for the respective pages stored in memory 260 in order to allow browsing or printing.

When a user desires to have the document reading device read images of document 112 including two leaves that are saddle-stitched as shown in Fig. 3, for example, the user sets document 112 on tray 101 as shown in (A) of Fig. 4 such that a third page and a fourth page of this document face up and a front cover and a back cover of this document face down. Document 112 is then transferred through the transfer route and subjected to a first reading. Next, the user sets document 112 on tray 101 as shown in (B) of Fig. 4 such that a fifth page and a sixth page of this document face up and a second page and a first page of this document face down. Document 112 is then transferred through the transfer route and subjected to a second reading.

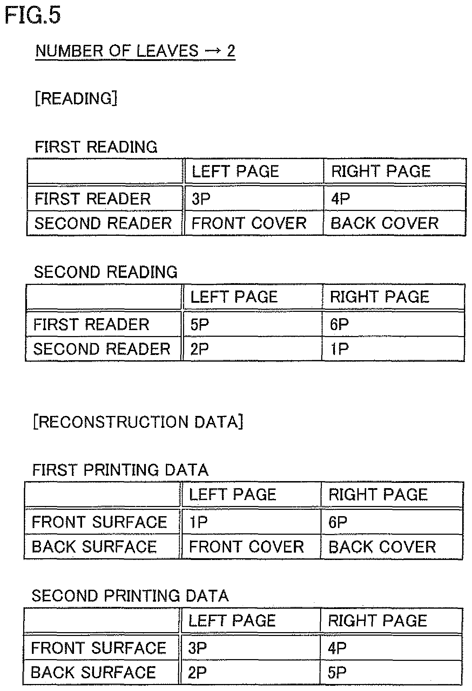

Fig. 5 shows a table of page number correspondence, for a document of two leaves, used for reconstructing image data that are read by the first reader and the second reader, and constituting a part of the program stored in memory 260. In "Reading" table, there are shown the page numbers corresponding to the images that are read by the first reader and the second reader respectively in the first reading and the second reading.

In "Reconstruction Data" table in Fig. 5, there is shown arrangements of the image data corresponding to the page numbers after the images are reconstructed. According to the image data thus reconstructed, for a first printing paper, an image for the first page and an image for the sixth page are respectively formed (printed) on the left hand and the right hand of the front surface, and an image for the front cover and an image for the back cover are respectively formed (printed) on the left hand and the right hand of the back surface. Further, for a second printing paper, an image for the third page and an image for the fourth page are respectively formed (printed) on the left hand and the right hand of the front surface, and an image for the second page and an image for the fifth page are respectively formed (printed) on the left hand and the right hand of the back surface.

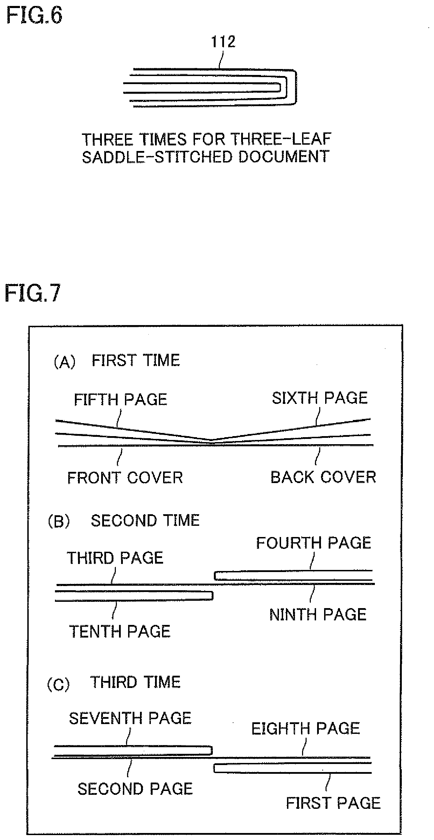

When a user desires to have the document reading device read images of document 112 including three leaves that are saddle-stitched as shown in Fig. 6, for example, the user sets document 112 on tray 101 as shown in (A) of Fig. 7 such that a fifth page and a sixth page of this document face up and a front cover and a back cover of this document face down. Document 112 is then transferred through the transfer route and subj ected to the first reading. Next, the user sets document 112 on tray 101 as shown in (B) of Fig. 7 such that a third page and a fourth page of this document face up and a tenth page and a ninth page of this document face down. Document 112 is then transferred through the transfer route and subjected to the second reading. Next, the user sets document 112 on tray 101 as shown in (C) of Fig. 7 such that a seventh page and an eighth page of this document face up and a second page and a first page of this document face down. Document 112 is then transferred through the transfer route and subjected to a third reading.

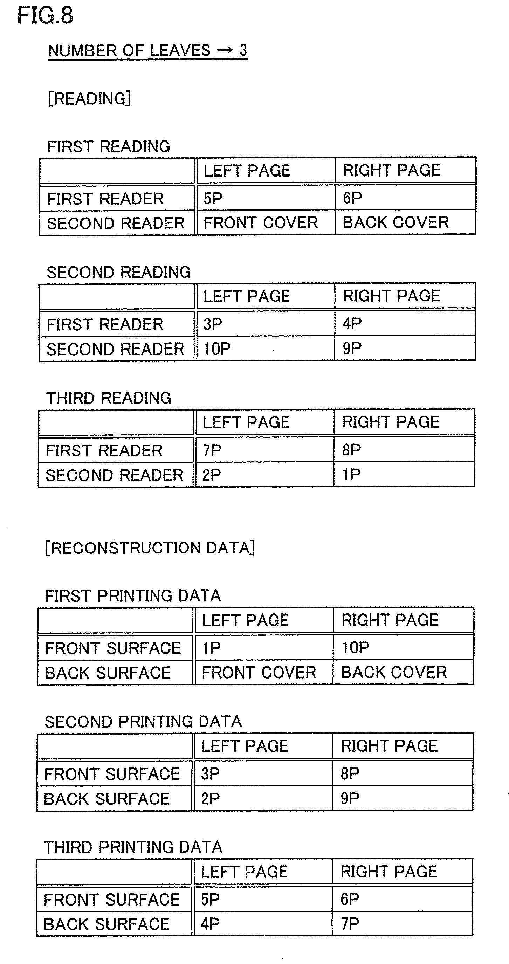

Fig. 8 shows a table of page number correspondence, for a document of three leaves, used for reconstructing image data that are read by the first reader and the second reader, and constituting a part of the program stored in memory 260. In "Reading" table, there are shown the page numbers corresponding to the images that are read by the first reader and the second reader respectively in the first reading to the third reading.

In "Reconstruction Data" table in Fig. 8, there is shown arrangements of the image data corresponding to the page numbers after the images are reconstructed in order to have the images be printed on printing papers. According to the image data thus reconstructed, for a first printing paper, an image for the first page and an image for the tenth page are respectively formed (printed) on the left hand and the right hand of the front surface, and an image for the front cover and an image for the back cover are respectively formed (printed) on the left hand and the right hand of the back surface. Further, for a second printing paper, an image for the third page and an image for the eighth page are respectively formed (printed) on the left hand and the right hand of the front surface, and an image for the second page and an image for the ninth page are respectively formed (printed) on the left hand and the right hand of the back surface. Moreover, for a third printing paper, an image for the fifth page and an image for the sixth page are respectively formed (printed) on the left hand and the right hand of the front surface, and an image for the fourth page and an image for the seventh page are respectively formed (printed) on the left hand and the right hand of the back surface.

Memory 260 stores the program so that the reconstruction is performed in different manners depending on the number of leaves saddle-stitched in the document as described above with reference to Figs. 3 to 8.

According to the document reading device, an input of information specifying the number of leaves saddle-stitched in the document in the saddle-stitched document mode is accepted through input unit 171. Based on this number, CPU 251 performs the reconstruction of the images for the pages of the document stored in memory 260. The number of leaves saddle-stitched in the document is not limited to two or three, and can be any number that is more than one. Alternatively, a total page number including the front cover and the back cover can be inputted instead of the information specifying the number of leaves.

### <Document Reading Process>

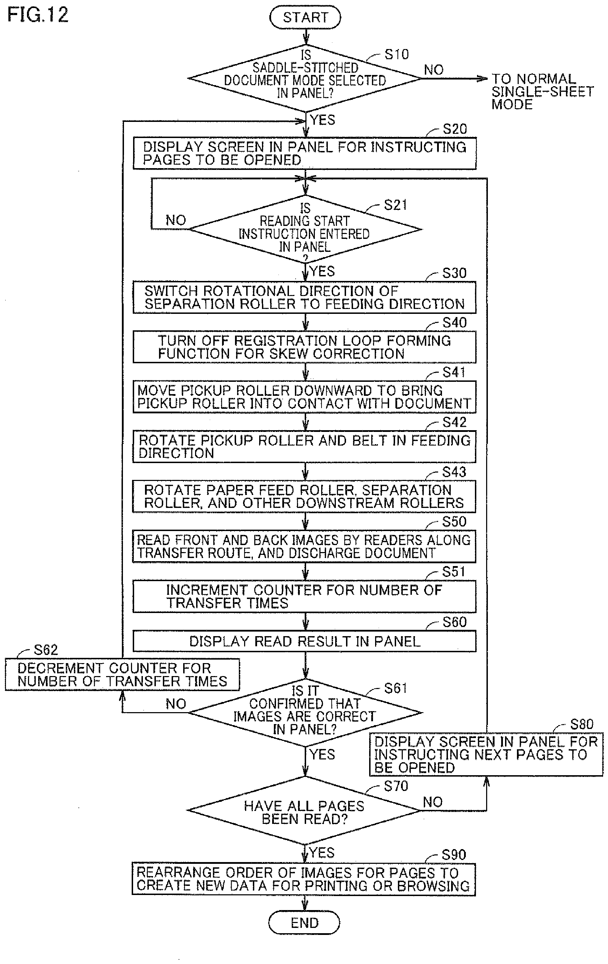

Fig. 12 is a flowchart of a document reading process executed in the document reading device according to this embodiment. The document reading process is executed by CPU 251 and CPU 151 in conjunction with each other.

Referring to Fig. 12, in Step S10, CPU 251 determines whether or not the saddle-stitched document mode has been selected by touch operation of display panel 170. If it is determined that the saddle-stitched document mode has been selected, the process proceeds to Step S20. By contrast, if it is determined that the single-sheet document mode has been selected instead of the saddle-stitched document mode, CPU 251 executes a reading process of images of a document in the single-sheet document mode. The reading process of images of a document in the single-sheet document mode can be executed using a known technique, and therefore not described herein.

In Step S20, CPU 251 displays information for specifying pages to be opened in display panel 170, and the process proceeds to Step S21.

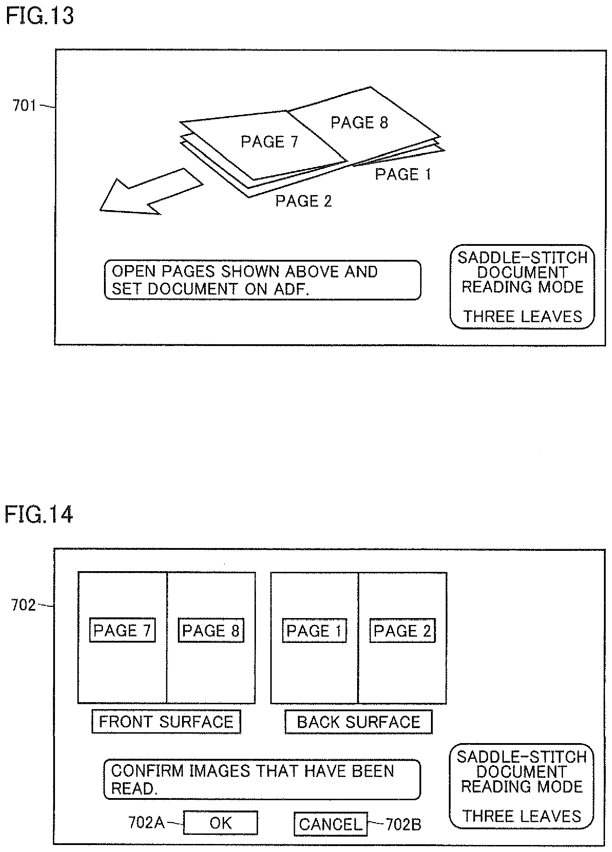

Fig. 13 illustrates one example of how a screen is shown in display panel 170.

A screen 701 in Fig. 13 illustrates how the saddle-stitch document is to be opened and set on tray 101. Specifically, the screen shows an image for specifying the pages of the document to be opened. Screen 701 also shows, in addition to the manner how the document is to be opened, the number of leaves saddle-stitched in the document whose images are to be read. CPU 251 accepts the input of the information specifying the number of saddle-stitched leaves, for example, after Step S10 and before carrying out Step S20. The information specifying the number of saddle-stitched leaves can be stored in memory 260 by default. In this case, the input of the above information can be accepted only when it is necessary to alter the stored number of leaves (when information indicating that the alteration is necessary is inputted to input unit 171). Alternatively, a total page number including the front cover and the back cover can be inputted instead of the information specifying the number of leaves.

The screen showing how the document is to be opened is displayed in display panel 170 also in Step S80 that will be later described, in addition to Step S20. The content to be displayed, that is, how the document is to be opened, varies depending on the number of saddle-stitched leaves and how many times the reading has been performed. Specifically, display panel 170 displays how the saddle-stitch document set on tray 101 is to be opened based on the number of saddle-stitched leaves and the number of transfer times.

For example, if the number of leaves saddle-stitched in the document is two, it is displayed such that the pages shown in the field for the "first reader" face up, and the pages shown in the field for the "second reader" face down according to the number af reading times in "Reading" table shown in Fig. 5.

If the number of leaves saddle-stitched in the document is three, it is displayed such that the pages shown in the field for the "first reader" face up, and the pages shown in the field for the "second reader" face down according to the number of reading times in "Reading" table shown in Fig. 8.

The number of leaves saddle-stitched in the document is not limited to two or three, and can be any number that is more than one.

CPU 251 acquires display content (screen data) indicating how the document is to be opened from memory 260 based on the number of leaves in the document and the number of reading times and displays the acquired data in display panel 170.

Referring back to Fig. 12, in Step S21, CPU 251 determines whether or not information to start reading the saddle-stitch document is inputted via input unit 171 of display panel 170. If it is determined that the information has been inputted, the process proceeds to Step S30. By contrast, if it is determined that the information has not been inputted, the process is suspended in Step S21.

According to this embodiment, separation roller 115 including the torque limiter is driven to rotate in a direction opposite of the document transfer direction in the single-sheet document mode, and separation roller 115 is driven to rotate in the document transfer direction in the saddle-stitched document mode. In Step S30, rotational direction switching mechanism 117 switches so that separation roller 115 rotates in the document transfer direction. With this, as shown in Fig. 15, separation roller 115 rotates in the direction in which the document is sent to the transfer route, similarly to paper feed roller 103, in transferring the document in Step S43.

In Step S40, CPU 151 turns off the skew correction. As a result, the skew correction by registration rollers 105 (Fig. 16) that is performed when transferring the document in the single-sheet document mode is not performed in the saddle-stitched document mode. This is to prevent the front end of the saddle-stitched document from being damaged by temporarily stopping at registration rollers 105 when a loop is formed by the rotation of intermediate rollers 104. In the saddle-stitched document mode, as shown in Fig. 17, registration rollers 105 does not make a temporary stop too, and rotates so as to transfer the document at the same timing as intermediate rollers 104 and the like. A reference symbol R24 indicates the rotational direction of registration rollers 105.

Next, in Step S41, as shown in Fig. 15, CPU 151 moves pickup roller 102 downward such that belt 193 is brought into pressure contact with pickup roller 102, and the process proceeds to Step S42.

In Step S42, CPU 151 starts feeding the document by rotating belt 193 along with pickup roller 102 in the direction for sending the document to the transfer route, and the process proceeds to Step S43.

In Step S43, CPU 151 starts transferring the document by rotating paper feed roller 103, separation roller 115, and other rollers on the downstream side along the document transfer direction, and the process proceeds to Step S50. Separation roller 115 rotates in the direction for transferring the document as shown in Fig. 15.

Next, in Step S50, CPU 151 and CPU 251 drive the rollers along the transfer route to transfer the document, the images on the front side and the back side of the document are read by the first reader and the second reader along the transfer route, memory 260 is caused to store the read images, and the document is discharged onto tray 113. Then, the process proceeds to Step S51.

In Step S51, CPU 251 increments the number of a counter by one, thereby incrementing the number of reading times by the first reader and the second reader to the document to be processed, that is, the number of transfer times, and the process proceeds to Step S60.

In Step S60, CPU 251 displays the images that have been read in Step S50 in display panel 170. Fig. 14 illustrates one example of the screen shown at this time. A screen 702 in Fig. 14 includes the images that have been read as the front surface and the back surface, an OK button 702A, and a cancel button 702B. As shown by such as "page 7" and "page 8" in the figure, screen 702 shows page information indicating pages to which the read images respectively correspond, along with the images that have been read.

Then, the process proceeds to Step S61. In Step S61, CPU 251 determines whether or not an operation to confirm that the images are correct has been made to input unit 171, that is, whether a touching operation has been made to OK button 702A or to cancel button 702B. If it is determined that the touching operation has been made to OK button 702A and that it has been confirmed that the images are correct, the process proceeds to Step S70. By contrast, if it is determined that the touching operation has been made to cancel button 702B and that it has been confirmed that the images are not correct, the process proceeds to Step S62, and the number of transfer times is decremented by one. Then, the process returns to Step S20.

In Step S70, CPU 251 determines whether or not all of the pages in the saddle-stitch document to be processed have been read. The above determination is made by determining whether or not the transfer has been performed by the number of transfer times to be performed according to the number of saddle-stitched leaves, for example. If it is determined that all of the pages in the saddle-stitch document to be processed have been read, the process proceeds to Step S90. By contrast, if it is determined that not all of the pages in the saddle-stitch document to be processed have been read, the process proceeds to Step S80.

In Step S80, CPU 251 displays a screen showing how the document is to be opened for the next reading in display panel 170, and the process returns to Step S21.

Further, in Step S90, the images that have been acquired through plural times of reading in the process from Steps S10 to S80 are reconstructed in memory 260 to generate electronic data for printing or browsing, and the document reading process is terminated.

According to this embodiment as described above, various adjustments are made in the saddle-stitched document mode, such as turning off a registration loop forming function, in order to prevent the document from being damaged. This eliminates an adverse effect envisaged in particular for a device configured to read images on both front and back sides at the same time as much as possible without unbinding the saddle-stitch document.

### <Modified Example (1)>

Next, a modified example (1) of the above described embodiment will be described.

According to modified example (1), there is provided a clutch for blocking transmission of driving force from motor 304 to separation roller 115, instead of rotational direction switching mechanism 117 for switching the rotational direction of separation roller 115.

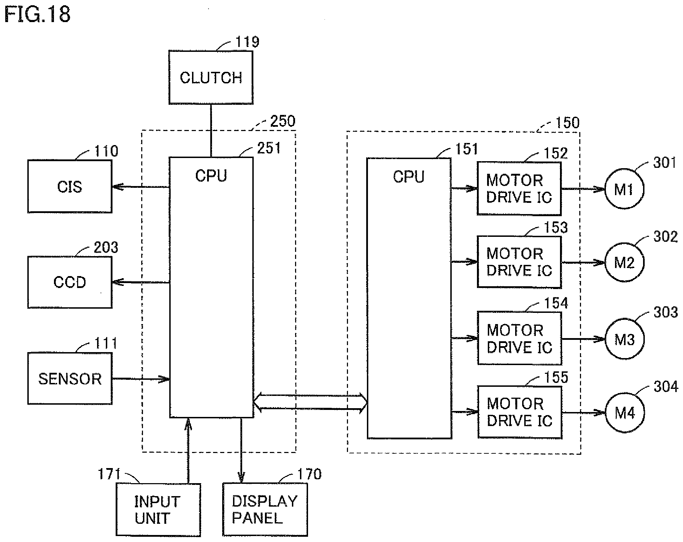

Fig. 18 is a block diagram illustrating a specific example of a control configuration of the document reading device according to this modified example. Fig. 18 shows the block diagram including a clutch 119 in addition to the block diagram shown in Fig. 2. Clutch 119 is for blocking the transmission of the driving force from motor 304 to separation roller 115.

In the saddle-stitched document mode, separation roller 115 and motor 304 are decoupled by clutch 119, and the driving force from motor 304 is not transmitted to separation roller 115, and separation roller 115 always rotates following paper feed roller 103. It is also possible to keep motor 304 turned off so as not to drive separation roller 115, thereby causing separation roller 115 to rotate following paper feed roller 103 without providing clutch 119.

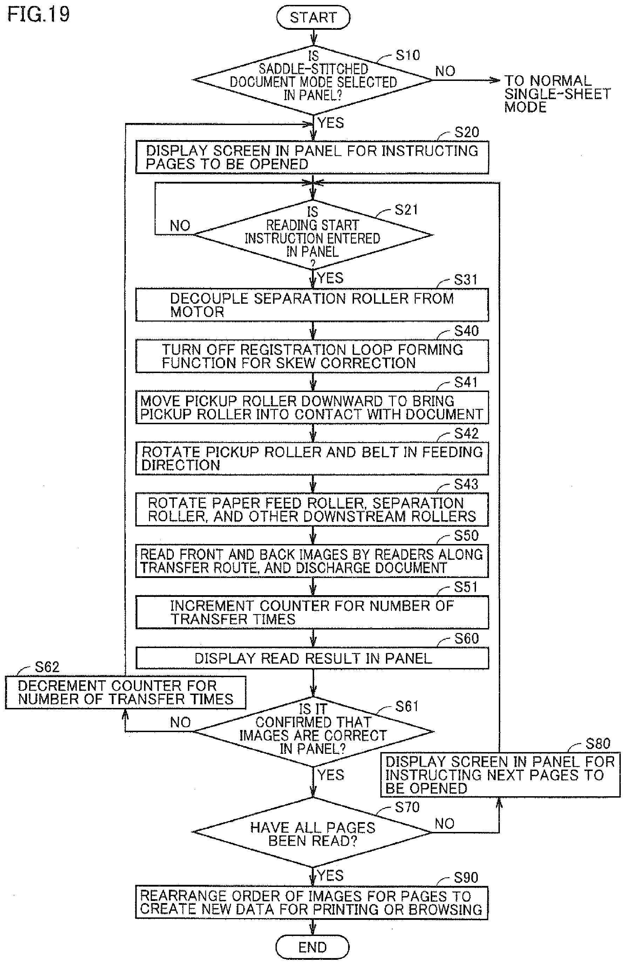

Fig. 19 is a flowchart of a document transfer process of this modified example.

Referring to Fig. 19, this modified example is different in that Step S31 is provided instead of Step S30 as compared to the flowchart shown in Fig. 12. As the steps of the same numbers as in the flowchart of Fig. 12 are the same as Fig. 12, only the step different from the flowchart of Fig. 12 will be described.

In this modified example, upon reception of the input of the information to start reading the saddle-stitch document from input unit 171 in Step S21 after displaying the screen in Step S20, in Step S31, CPU 251 turns clutch 119 on to decouple separation roller 115 and motor 304. Then, the process proceeds to Step S40.

### <Modified Example (2)>

Next, a modified example (2) will be described.

Modified example (2) is different from the previous embodiment in that both of each pair of rollers are driven, instead of configuring the pairs of rollers such that one of each pair of rollers is driven and whereby the other roller rotates following the driven roller. Specifically, paper feed motor 301 is connected to both of the pair of intermediate rollers 104, registration motor 303 is connected to both of the pair of registration rollers 105, read motor 302 is connected to both of the pairs af read rollers 106, 107, and 108, and paper exit motor 304 is connected to both of the pair of paper exit rollers 109. Each motor drives both of the corresponding pair of rollers in the document transfer direction.

As this allows the document to be transferred with stronger force, it is possible to transfer the document reliably also in the saddle-stitched document mode in which more than one leaves are transferred.

### <Modified Example (3)>

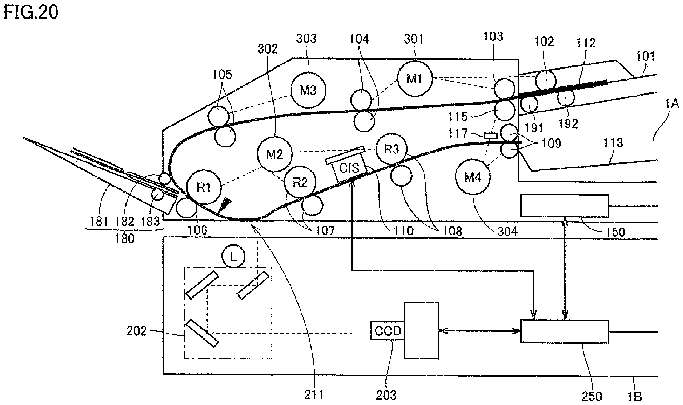

Fig. 20 illustrates a modified example (3).

A device shown in Fig. 20 is provided with an additional tray unit 180 in addition to the configuration of the device shown in Fig. 1. Additional tray unit 180 includes a tray 181, rollers 182, and 183.

Rollers 182 and 183 send the document set on tray 181 to read rollers 106. The document sent from tray 181 to read rollers 106 passes through read rollers 107, read roller 108, and paper exit rollers 109, and exits to tray 113. In this transfer route, the direction for transferring the document is always directed toward right in the figure.

According to this modified example (3), the document is transferred, in the single-sheet document mode, along the transfer route that passes through pickup roller 102 and paper feed roller 103, and to tray 113 from tray 101. In this transfer route, the document is first transferred toward left, and then redirected to right during the transfer. The document set on the right hand of the device exits on the right hand of the device. Accordingly, it is possible to reduce a moving distance as much as possible for the user who has set the document to receive the discharged document.

By contrast, the transfer direction of the document is not redirected along the transfer route along which the document is transferred from to tray 181 to read rollers 107. Accordingly, it is possible to reduce the load on the document as compared to the transfer route that changes the transfer direction in the middle of the transfer. According to this modified example (3), the document is transferred, in the saddle-stitched document mode, along the transfer route that passes from tray 181 to read rollers 107.

### <Modified Example (4)>

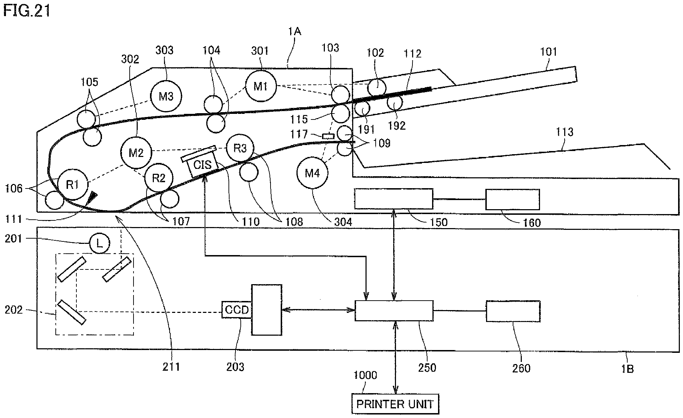

Fig. 21 illustrates one example of an image forming device according to the present invention.

Connecting an image reading device as described above to printer unit 1000 realizes an image forming device for forming the images that the image reading device has generated by the printer unit.

Examples of the image forming device according to the present invention include a copying machine, a printer, a scanner, a facsimile machine, and a multifunction peripheral (MFP) having functions of two or more of these apparatuses. Similarly to an image forming function provided for a general-purpose printer, printer unit 1000 has a function of forming (printing) the images generated (acquired) by the image reading device on a recording medium such as printing paper.

According to this embodiment as described above, a first side of a saddle-stitch document is read by a first reader, a second side of the saddle-stitch document is read by a second reader, and the images of the document are rearranged in order of the pages in the saddle-stitch document based on the number of leaves acquired by acquiring means and how the document is opened.

Therefore, it is possible for the user to acquire the images rearranged in order of the pages in the saddle-stitch document, without unbinding the saddle-stitch document, at fewer times of setting the document in the saddle-stitched state on the ADF as compared to the number of times of setting the document on the platen glass spreading each page.

This facilitates reading of the saddle-stitched document.

Although the present invention has been described and illustrated in detail, it is clearly understood that the same is by way of illustration and example only and is not to be taken by way of limitation, the scope of the present invention being interpreted by the terms of the appended claims.

## Claims

1. A document reading device (1A, 1B), comprising:
a paper feed tray (101) for placing a saddle-stitched document thereon in a saddle-stitched state;
a transferring unit (301, 302, 303, 304) for transferring the document in a saddle-stitched state from said paper feed tray;
a first reader (1B) for reading a front surface of the document along a route of transfer through which said transferring unit transfers the document;
a second reader (110) for reading a back surface of the document along said route of transfer;
an acquiring unit (171) for acquiring either a total number of leaves or a total number of pages included in said saddle-stitch document; and
a counter (251, s51) for counting the number of transfer times of said saddle-stitch document through said route of transfer,
a notifying unit (170) for notifying of a manner how the saddle-stitch document is to be opened to be placed on said paper feed tray;
a storage unit (260) for storing images of each page of the saddle-stitch document read by said first reader and said second reader; and
a reconstructing unit (251) for reconstructing the images stored in said storage unit by rearranging an order of the images wherein
said notifying unit is configured to update and notify of the manner how the saddle-stitch document being transferred through said route of transfer is to be opened based on the total number of leaves or the total number of pages acquired by said acquiring unit and the number of transfer times counted by said counter, and
said reconstructing unit is configured to reconstruct the images stored in said storage unit based on the total number of leaves or the total number of pages acquired by said acquiring unit,
wherein the document reading device further comprises: a paper feed roller (103) for feeding the document to said route of transfer;
a separation roller (115) having a separation function of separating sheets of document one by one, and to nip the document with said paper feed roller; and
a separation roller controller (117) for controlling said separation roller, wherein
said separation roller controller
is capable of controlling in one of a single-sheet mode and a saddle-stitching mode, the single-sheet mode being for transferring a single-sheet document through said route of transfer, the saddle-stitching mode being for transferring the saddle-stitch document through said route of transfer,
activates the separation function of said separation roller in said single-sheet mode, and
deactivates the separation function of said separation roller in said saddle-stitching mode,
and wherein the document reading device further comprises:
a pickup roller (102) for feeding the document placed on said paper feed tray to said route of transfer;
a transfer mechanism (191, 192, 193) having a rotating body provided on said paper feed tray so as to face said pickup roller; and
a transfer controller (151) for controlling said transfer mechanism, wherein
said transfer controller is capable of controlling in one of said single-sheet mode and said saddle-stitching mode,
maintains said transfer mechanism in a stopped state in said single-sheet mode, and
drives said transfer mechanism in a transfer direction in said saddle-stitching mode.

2. The document reading device according to claim 1, further comprising:
a separation roller driver (304) for driving said separation roller; and
a driver switch (117) for switching a rotational direction transmitted from said separation roller driver to said separation roller, wherein
said separation roller controller controls said driver switch such that
in said single-sheet mode, said separation roller rotates in a direction opposite of a direction for sending the document to said route of transfer, and
in said saddle-stitching mode, said separation roller rotates in the direction for sending the document to said route of transfer.

3. The document reading device according to claim 1, further comprising:
a separation roller driver (304) for driving said separation roller; and
a blocking unit (119) for blocking transmission of driving force from said separation roller driver to said separation roller, wherein
said separation roller controller controls said blocking unit such that
in said single-sheet mode, said separation roller is driven by said separation roller driver, and
in said saddle-stitching mode, said separation roller is prevented from being driven by said separation roller driver.

4. The document reading device according to any one of claims 1 to 3, further comprising:
a registration unit (105, 303), provided along said route of transfer, for transferring the document with timing; and
a registration unit controller (251) for controlling said registration unit, wherein
said registration unit controller is capable of controlling in one of said single-sheet mode and said saddle-stitching mode,
causes said registration unit to temporarily stop the document when transferring the document in said single-sheet mode, and
causes said registration unit to be prevented from temporarily stopping the document when transferring the document in said saddle-stitching mode.

5. The document reading device according to any one of claims 1 to 4, said route of transfer including a first route to send the document in a first direction, and a second route provided downstream from said first route and to send the document in a second direction that is opposite of said first direction, said first reader and said second reader reading the document along said second route, the document reading device further comprising:
an additional tray (181) for sending said document to said second route without passing through said first route; and
a controller (251) for controlling in one of said single-sheet mode and said saddle-stitching mode is further provided, wherein
said controller
transfers the document so that the document passes through said first route and said second route in said single-sheet mode, and
transfers the document so that the document passes through said second route from said additional tray in said saddle-stitching mode.

6. The document reading device according to any one of claims 1 to 5, further comprising:
at least one pair of rollers (102, 191, 192, 103, 115, 104, 105, 106, 107, 108, 109) provided along said route of transfer; and
a roller driver (M1, M2, M3, M4) to drive both of said pair of rollers to rotate in a document transfer direction.

7. An image forming device (1A, 1B, 1000) comprising the document reading device according to any one of claims 1 to 6.

8. A method, executed by a computer, of controlling a document reading device including: a storage unit; a paper feed tray for placing a saddle-stitched document thereon in a saddle-stitched state; a transferring unit for transferring the document in saddle-stitched state from said paper feed tray; a first reader and a second reader for respectively reading a front surface and a back surface of a document along a route of transfer through which said transferring unit transfers the document, the method comprising the steps of:
notifying of a manner how the saddle-stitch document is to be opened to be placed on said paper feed tray;
storing images of each page of the saddle-stitch document read by said first reader and said second reader in said storage unit;
reconstructing the images stored in said storage unit by rearranging an order of the images, the images respectively being of pages of the saddle-stitch document,
the method further comprising the steps of:
acquiring either a total number of leaves or a total number of pages included in said saddle-stitch document; and
counting the number of transfer times of said saddle-stitch document through said route of transfer, wherein
in said notifying, the manner how the saddle-stitch document being transferred through said route of transfer is to be opened is updated and notified based on the total number of leaves or the total number of pages as well as on the number of transfer times, and
in said reconstructing step, the images stored in said storage unit are reconstructed based on the acquired total number of leaves or the total number of pages,
wherein the document reading device further comprises:
a paper feed roller (103) for feeding the document to said route of transfer;
a separation roller (115) having a separation function of separating sheets of document one by one, and to nip the document with said paper feed roller; and
a separation roller controller (117) for controlling said separation roller, wherein
said separation roller controller
is capable of controlling in one of a single-sheet mode and a saddle-stitching mode, the single-sheet mode being for transferring a single-sheet document through said route of transfer, the saddle-stitching mode being for transferring the saddle-stitch document through said route of transfer,
activates the separation function of said separation roller in said single-sheet mode, and
deactivates the separation function of said separation roller in said saddle-stitching mode,
and wherein the document reading device further comprises:
a pickup roller (102) for feeding the document placed on said paper feed tray to said route of transfer;
a transfer mechanism (191, 192, 193) having a rotating body provided on said paper feed tray so as to face said pickup roller; and
a transfer controller (151) for controlling said transfer mechanism, wherein
said transfer controller is capable of controlling in one of said single-sheet mode and said saddle-stitching mode,
maintains said transfer mechanism in a stopped state in said single-sheet mode, and
drives said transfer mechanism in a transfer direction in said saddle-stitching mode.

## Patentansprüche

1. Dokumentlesevorrichtung (1A, 1B), umfassend:
- eine Papierzufuhr-Ablage (101), um darauf ein rückstichgeheftetes Dokument in einem rückstichgehefteten Zustand zu platzieren;
- eine Transfereinheit (301, 302, 303, 304) zum Transferieren des Dokuments in einem rückstichgehefteten Zustand von der Papierzufuhr-Ablage;
- einen erster Leser (1B) zum Lesen einer Vorderfläche des Dokuments entlang eines Transferwegs, durch welchen die Transfereinheit das Dokument transferiert;
- einen zweite Leser (110) zum Lesen einer Rückfläche des Dokuments entlang des Transferwegs;
- eine Bezugseinheit (171) zum Beziehen entweder einer Gesamtzahl von Blättern oder einer Gesamtzahl von Seiten, die in dem rückstichgehefteten Dokument enthalten sind; und
- einen Zähler (251, s51) zum Zählen der Anzahl der Male des Transfers des rückstichgehefteten Dokuments durch den Transferweg;
- eine Mitteilungseinheit (170) zum Mitteilen einer Art und Weise, wie das rückstichgeheftete Dokument zu öffnen ist, um auf der Papierzufuhr-Ablage platziert zu werden;
- eine Speichereinheit (260) zum Speichern von Bildern von jeder Seite des von dem ersten Leser und dem zweiten Leser gelesenen rückstichgehefteten Dokuments; und
- ein Rekonstruktionseinheit (251) zum Rekonstruieren der in der Speichereinheit gespeicherten Bilder durch Umordnen einer Reihenfolge der Bilder, wobei
- die Mitteilungseinheit dazu konfiguriert ist, die Art und Weise, wie das rückstichgeheftete Dokument, das durch den Transferweg transferiert wird, zu öffnen ist, auf Basis der Gesamtzahl von Blättern oder der Gesamtzahl von Seiten, die von der Bezugseinheit bezogen wurden, und der Anzahl von Malen des Transfers, die von dem Zähler gezählt wurden, zu aktualisieren und mitzuteilen, und
- die Rekonstruktionseinheit dazu konfiguriert ist, die in der Speichereinheit gespeicherten Bilder auf Basis der Gesamtzahl von Blättern oder der Gesamtzahl von Seiten, die von der Bezugseinheit bezogen wurden, zu rekonstruieren,
- wobei die Dokumentlesevorrichtung ferner umfasst:
- eine Papierzufuhr-Rolle (103) zum Zuführen des Dokuments zu dem Transferweg;
- eine Trennungsrolle (115), die eine Trennungsfunktion zum Trennen von Blättern des Dokuments nacheinander hat, und um das Dokument mit der Papierzufuhr-Rolle zu greifen; und
- eine Trennungsrollen-Steuerung (117) zum Steuern der Trennungsrolle, wobei
- die Trennungsrollen-Steuerung
- dazu imstande ist, in einem von einem Einzelblattmodus und einem Rückstichheftungsmodus zu steuern, wobei der Einzelblattmodus zum Transferieren eines Einzelblatt-Dokuments durch den Transferweg ist, wobei der Rückstichheftungsmodus zum Transferieren des Rückstichgehefteten Dokuments durch den Transferweg ist,
- die Trennungsfunktion der Trennungsrolle im Einzelblattmodus aktiviert, und
- die Trennungsfunktion der Trennungsrolle im Rückstichheftungsmodus deaktiviert,
- und wobei die Dokumentlesevorrichtung ferner umfasst:
- eine Aufnehmrolle (102) zum Zuführen des auf der Papierzufuhr-Ablage platzierten Dokuments zum Transferweg;
- einen Transfermechanismus (191, 192, 193) mit einem rotierenden Körper, der auf der Papierzufuhr-Ablage so vorgesehen ist, dass er der Aufnehmrolle zugewandt ist; und
- eine Transfersteuerung (151) zum Steuern des Transfermechanismus, wobei
- die Transfersteuerung
- zum Steuern in einem von dem Einzelblattmodus und dem Rückstichheftungsmodus imstande ist,
- den Transfermechanismus in dem Einzelblattmodus in einem angehaltenen Zustand hält, und
- den Transfermechanismus in dem Rückstichheftungsmodus in einer Transferrichtung treibt.

2. Dokumentlesevorrichtung nach Anspruch 1, ferner umfassend:
- einen Trennungsrollen-Treiber (304) zum Treiben der Trennungsrolle; und
- einen Treiberschalter (117) zum Schalten einer Rotationsrichtung, die von dem Trennungsrollen-Treiber an die Trennungsrolle übertragen wurde, wobei
- die Trennungsrollen-Steuerung den Treiberschalter so steuert, dass
- im Einzelblattmodus die Trennungsrolle in einer Richtung rotiert, die einer Richtung zum Senden des Dokuments an den Transferweg entgegengesetzt ist, und
- im Rückstichheftungsmodus die Trennungsrolle in der Richtung zum Senden des Dokuments an den Transferweg rotiert.

3. Dokumentlesevorrichtung nach Anspruch 1, ferner umfassend:
- einen Trennungsrollen-Treiber (304) zum Treiben der Trennungsrolle; und
- eine Blockiereinheit (119) zum Blockieren der Übertragung der Antriebskraft von dem Trennungsrollen-Treiber an die Trennungsrolle, wobei
- die Trennungsrollen-Steuerung die Blockiereinheit so steuert, dass
- im Einzelblattmodus die Trennungsrolle von dem Trennungsrollen-Treiber getrieben wird, und
- im Rückstichheftungsmodus verhindert wird, dass die Trennungsrolle von dem Trennungsrollen-Treiber getrieben wird.

4. Dokumentlesevorrichtung nach einem der Ansprüche 1 bis 3, ferner umfassend:
- eine Registriereinheit (105, 303), die entlang des Transferwegs vorgesehen ist, zum Transferieren des Dokuments mit zeitlicher Abstimmung; und
- eine Registriereinheitssteuerung (251) zum Steuern der Registriereinheit, wobei
- die Registriereinheitssteuerung
- dazu imstande ist, in einem von dem Einzelblattmodus und dem Rückstichheftungsmodus zu steuern,
- die Registriereinheit dazu veranlasst, das Dokument vorübergehend anzuhalten, wenn das Dokument im Einzelblattmodus transferiert wird, und
- die Registriereinheit dazu veranlasst, am vorübergehenden Anhalten des Dokuments gehindert zu werden, wenn das Dokument im Rückstichheftungsmodus transferiert wird.

5. Dokumentlesevorrichtung nach einem der Ansprüche 1 bis 4, wobei der Transferweg einen ersten Weg zum Senden des Dokuments in einer ersten Richtung und einen zweiten Weg umfasst, der dem ersten Weg nachgeordnet ist und zum Senden des Dokuments in einer zweiten Richtung dient, die der ersten Richtung entgegengesetzt ist, wobei der erste Leser und der zweite Leser das Dokument entlang des zweiten Weges lesen, wobei die Dokumentlesevorrichtung ferner umfasst:
- eine zusätzliche Ablage (181) zum Senden des Dokuments an den zweiten Weg, ohne den ersten Weg zu durchlaufen; und
- eine Steuerung (251) zum Steuern in einem von dem Einzelblattmodus und dem Rückstichheftungsmodus ferner vorgesehen ist,
- wobei die Steuerung
- das Dokument so transferiert, dass das Dokument im Einzelblattmodus den ersten Weg und den zweiten Weg durchläuft, und
- das Dokument so transferiert, dass das Dokument im Rückstichheftungsmodus von der zusätzlichen Ablage aus den zweiten Weg durchläuft.

6. Dokumentlesevorrichtung nach einem der Ansprüche 1 bis 5, ferner umfassend:
- mindestens ein Paar von Rollen (102, 191, 192, 103, 115, 104, 105, 106, 107, 108, 109), die entlang des Transferwegs vorgesehen sind; und
- einen Rollentreiber (M1, M2, M3, M4) zum Treiben beider von dem Paar von Rollen zum Rotieren in einer Dokument-Transferrichtung.

7. Bilderzeugungsvorrichtung (1A, 1B, 1000) umfassend die Dokumentlesevorrichtung nach einem der Ansprüche 1 bis 6.

8. Verfahren, das von einem Computer ausgeführt wird, des Steuerns einer Dokumentlesevorrichtung, umfassend: eine Speichereinheit; eine Papierzufuhr-Ablage, um darauf ein rückstichgeheftetes Dokument in einem rückstichgehefteten Zustand zu platzieren; eine Transfereinheit zum Transferieren des Dokuments in einem rückstichgehefteten Zustand von der Papierzufuhr-Ablage; einen erster Leser und einen zweiten Leser zum jeweiligen Lesen einer Vorderfläche und einer Rückfläche eines Dokuments entlang eines Transferwegs, durch welchen die Transfereinheit das Dokument transferiert, wobei das Verfahren die Schritte umfasst:
- Mitteilen einer Art und Weise, wie das rückstichgeheftete Dokument zu öffnen ist und auf der Papierzufuhr-Ablage zu platzieren ist;
- Speichern von Bildern von jeder von dem ersten Leser und dem zweiten Leser gelesenen Seite des rückstichgehefteten Dokuments in der Speichereinheit;
- Rekonstruieren der in der Speichereinheit gespeicherten Bilder durch Umordnen einer Reihenfolge der Bilder, wobei die Bilder jeweils von Seiten des rückstichgehefteten Dokuments sind,
- wobei das Verfahren ferner die Schritte umfasst:
- Beziehen entweder einer Gesamtzahl von Blättern oder einer Gesamtzahl von Seiten, die in dem rückstichgehefteten Dokument enthalten sind; und
- Zählen der Anzahl der Male des Transfers des rückstichgehefteten Dokuments durch den Transferweg, wobei
- beim Mitteilen die Art und Weise, wie das rückstichgeheftete Dokument, das durch den Transferweg transferiert wird, zu öffnen ist, auf Basis der Gesamtzahl von Blättern oder der Gesamtzahl von Seiten sowie der Anzahl von Malen des Transfers aktualisiert und mitgeteilt wird, und
- im Rekonstruktionsschritt die in der Speichereinheit gespeicherten Bilder auf Basis der bezogenen Gesamtzahl von Blättern oder der Gesamtzahl von Seiten rekonstruiert werden,
- wobei die Dokumentlesevorrichtung ferner umfasst:
- eine Papierzufuhr-Rolle (103) zum Zuführen des Dokuments zu dem Transferweg;
- eine Trennungsrolle (115), die eine Trennungsfunktion zum Trennen von Blättern des Dokuments nacheinander hat, und um das Dokument mit der Papierzufuhr-Rolle zu greifen; und
- eine Trennungsrollen-Steuerung (117) zum Steuern der Trennungsrolle, wobei
- die Trennungsrollen-Steuerung
- dazu imstande ist, in einem von einem Einzelblattmodus und einem Rückstichheftungsmodus zu steuern, wobei der Einzelblattmodus zum Transferieren eines Einzelblatt-Dokuments durch den Transferweg ist, wobei der Rückstichheftungsmodus zum Transferieren des Rückstichgehefteten Dokuments durch den Transferweg ist,
- die Trennungsfunktion der Trennungsrolle im Einzelblattmodus aktiviert, und
- die Trennungsfunktion der Trennungsrolle im Rückstichheftungsmodus deaktiviert,
- und wobei die Dokumentlesevorrichtung ferner umfasst:
- eine Aufnehmrolle (102) zum Zuführen des auf der Papierzufuhr-Ablage platzierten Dokuments zum Transferweg;
- einen Transfermechanismus (191, 192, 193) mit einem rotierenden Körper, der auf der Papierzufuhr-Ablage so vorgesehen ist, dass er der Aufnehmrolle zugewandt ist; und
- eine Transfersteuerung (151) zum Steuern des Transfermechanismus, wobei
- die Transfersteuerung
- dazu imstande ist, in einem von dem Einzelblattmodus und dem Rückstichheftungsmodus zu steuern,
- den Transfermechanismus in einem angehaltenen Zustand in dem Einzelblattmodus hält, und
- den Transfermechanismus in einer Transferrichtung im Rückstichheftungsmodus treibt.

## Revendications

1. Dispositif de lecture de document (1A, 1B), comprenant :
un plateau d'introduction de papier (101) pour y placer un document agrafé à cheval dans un état agrafé à cheval ;
une unité de transfert (301, 302, 303, 304) pour transférer le document dans un état agrafé à cheval depuis ledit plateau d'introduction de papier;
un premier lecteur (1B) pour lire une surface recto du document le long d'un chemin de transfert à travers lequel ladite unité de transfert transfère le document ;
un second lecteur (110) pour lire une surface verso du document le long dudit chemin de transfert;
une unité d'acquisition (171) pour acquérir soit un nombre total de feuillets, soit un nombre total de pages comprises dans ledit document agrafé à cheval ; et
un compteur (251, s51) pour compter le nombre de transferts dudit document agrafé à cheval à travers ledit chemin de transfert,
une unité de notification (170) pour notifier une manière selon laquelle le document agrafé à cheval doit être ouvert pour être placé sur ledit plateau d'introduction de papier;
une unité de stockage (260) pour stocker des images de chaque page du document agrafé à cheval lu par ledit premier lecteur et ledit second lecteur; et
une unité de reconstruction (251) pour reconstruire les images stockées dans ladite unité de stockage par réagencement d'un ordre des images, dans lequel
ladite unité de notification est configurée pour mettre à jour et notifier la manière selon laquelle le document agrafé à cheval étant transféré à travers ledit chemin de transfert doit être ouvert sur la base du nombre total de feuillets ou du nombre total de pages acquis par ladite unité d'acquisition et du nombre de transferts compté par ledit compteur, et
ladite unité de reconstruction est configurée pour reconstruire les images stockées dans ladite unité de stockage sur la base du nombre total de feuillets ou du nombre total de pages acquis par ladite unité d'acquisition,
dans lequel le dispositif de lecture de document comprend en outre :
un rouleau d'introduction de papier (103) pour introduire le document sur ledit chemin de transfert ;
un rouleau de séparation (115) ayant une fonction de séparation consistant à séparer des feuilles de document une par une, et à pincer le document avec ledit rouleau d'introduction de papier; et
un dispositif de commande de rouleau de séparation (117) pour commander ledit rouleau de séparation, dans lequel
ledit dispositif de commande de rouleau de séparation
est capable de commander dans l'un parmi un mode feuille unique et un mode agrafage à cheval, le mode feuille unique étant destiné au transfert d'un document à feuille unique à travers ledit chemin de transfert, le mode agrafage à cheval étant destiné au transfert du document agrafé à cheval à travers ledit chemin de transfert,
active la fonction de séparation dudit rouleau de séparation dans ledit mode feuille unique, et
désactive la fonction de séparation dudit rouleau de séparation dans ledit mode agrafage à cheval,
et dans lequel le dispositif de lecture de document comprend en outre :
un rouleau de prélèvement (102) pour introduire le document placé sur ledit plateau d'introduction de papier sur ledit chemin de transfert ;
un mécanisme de transfert (191, 192, 193) ayant un corps rotatif disposé sur ledit plateau d'introduction de papier de sorte à faire face audit rouleau de prélèvement; et
un dispositif de commande de transfert (151) pour commander ledit mécanisme de transfert, dans lequel
ledit dispositif de commande de transfert
est capable de commander dans l'un parmi ledit mode feuille unique et ledit mode agrafage à cheval,
maintient ledit mécanisme de transfert dans un état arrêté dans ledit mode feuille unique, et
entraîne ledit mécanisme de transfert dans un sens de transfert dans ledit mode agrafage à cheval.

2. Dispositif de lecture de document selon la revendication 1, comprenant en outre :
un dispositif d'entraînement de rouleau de séparation (304) pour entraîner ledit rouleau de séparation ; et
un commutateur de dispositif d'entraînement (117) pour commuter un sens de rotation transmis dudit dispositif d'entraînement de rouleau de séparation audit rouleau de séparation, dans lequel
ledit dispositif de commande de rouleau de séparation commande ledit commutateur de dispositif d'entraînement de sorte que
dans ledit mode feuille unique, ledit rouleau de séparation tourne dans un sens opposé à un sens pour envoyer le document sur ledit chemin de transfert, et
dans ledit mode agrafage à cheval, ledit rouleau de séparation tourne dans le sens pour envoyer le document sur ledit chemin de transfert.

3. Dispositif de lecture de document selon la revendication 1, comprenant en outre :
un dispositif d'entraînement de rouleau de séparation (304) pour entraîner ledit rouleau de séparation ; et
une unité de blocage (119) pour bloquer la transmission d'une force d'entraînement dudit dispositif d'entraînement de rouleau de séparation audit rouleau de séparation, dans lequel
ledit dispositif de commande de rouleau de séparation commande ladite unité de blocage de sorte que
dans ledit mode feuille unique, ledit rouleau de séparation soit entraîné par ledit dispositif d'entraînement de rouleau de séparation, et
dans ledit mode agrafage à cheval, ledit rouleau de séparation soit empêché d'être entraîné par ledit dispositif d'entraînement de rouleau de séparation.

4. Dispositif de lecture de document selon l'une quelconque des revendications 1 à 3, comprenant en outre :
une unité d'enregistrement (105, 303), disposée le long dudit chemin de transfert, pour transférer le document de manière synchronisée ; et
un dispositif de commande d'unité d'enregistrement (251) pour commander ladite unité d'enregistrement, dans lequel
ledit dispositif de commande d'unité d'enregistrement
est capable de commander dans l'un parmi ledit mode feuille unique et ledit mode agrafage à cheval,
fait en sorte que ladite unité d'enregistrement arrête temporairement le document lors du transfert du document dans ledit mode feuille unique, et
fait en sorte que ladite unité d'enregistrement soit empêchée d'arrêter temporairement le document lors du transfert du document dans ledit mode agrafage à cheval.

5. Dispositif de lecture de document selon l'une quelconque des revendications 1 à 4, ledit chemin de transfert comprenant un premier chemin pour envoyer le document dans un premier sens, et un second chemin disposé en aval dudit premier chemin et pour envoyer le document dans un second sens qui est opposé audit premier sens, ledit premier lecteur et ledit second lecteur lisant le document le long dudit second chemin, le dispositif de lecture de document comprenant en outre :
un plateau supplémentaire (181) pour envoyer ledit document sur ledit second chemin sans passer à travers ledit premier chemin ; et
un dispositif de commande (251) pour commander dans l'un parmi ledit mode feuille unique et ledit mode agrafage à cheval est en outre fourni,
dans lequel
ledit dispositif de commande
transfère le document de sorte que le document passe à travers ledit premier chemin et ledit second chemin dans ledit mode feuille unique, et
transfère le document de sorte que le document passe à travers ledit second chemin depuis ledit plateau supplémentaire dans ledit mode agrafage à cheval.

6. Dispositif de lecture de document selon l'une quelconque des revendications 1 à 5, comprenant en outre :
au moins une paire de rouleaux (102, 191, 192, 103, 115, 104, 105, 106, 107, 108, 109) disposés le long dudit chemin de transfert ; et
un dispositif d'entraînement de rouleaux (M1, M2, M3, M4) pour entraîner les deux de ladite paire de rouleaux en rotation dans un sens de transfert de document.

7. Dispositif de formation d'image (1A, 1B, 1000) comprenant le dispositif de lecture de document selon l'une quelconque des revendications 1 à 6.

8. Procédé, exécuté par un ordinateur, de commande d'un dispositif de lecture de document comprenant: une unité de stockage; un plateau d'introduction de papier pour y placer un document agrafé à cheval dans un état agrafé à cheval ; une unité de transfert pour transférer le document dans un état agrafé à cheval depuis ledit plateau d'introduction de papier; un premier lecteur et un second lecteur pour lire respectivement une surface recto et une surface verso d'un document le long d'un chemin de transfert à travers lequel ladite unité de transfert transfère le document, le procédé comprenant les étapes consistant à :
notifier une manière selon laquelle le document agrafé à cheval doit être ouvert pour être placé sur ledit plateau d'introduction de papier;
stocker des images de chaque page du document agrafé à cheval lue par ledit premier lecteur et ledit second lecteur dans ladite unité de stockage ;
reconstruire les images stockées dans ladite unité de stockage par réagencement d'un ordre des images, les images étant respectivement des pages du document agrafé à cheval,
le procédé comprenant en outre les étapes consistant à :
acquérir soit un nombre total de feuillets, soit un nombre total de pages comprises dans ledit document agrafé à cheval ; et
compter le nombre de transferts dudit document agrafé à cheval à travers ledit chemin de transfert, dans lequel
dans ladite notification, la manière selon laquelle le document agrafé à cheval étant transféré à travers ledit chemin de transfert doit être ouvert est mise à jour et notifiée sur la base du nombre total de feuillets ou du nombre total de pages ainsi que du nombre de transferts, et
dans ladite étape de reconstruction, les images stockées dans ladite unité de stockage sont reconstruites sur la base du nombre total de feuillets acquis ou du nombre total de pages acquis,
dans lequel le dispositif de lecture de document comprend en outre :
un rouleau d'introduction de papier (103) pour introduire le document sur ledit chemin de transfert;
un rouleau de séparation (115) ayant une fonction de séparation consistant à séparer des feuilles de document une par une, et à pincer le document avec ledit rouleau d'introduction de papier; et
un dispositif de commande de rouleau de séparation (117) pour commander ledit rouleau de séparation, dans lequel
ledit dispositif de commande de rouleau de séparation
est capable de commander dans l'un parmi un mode feuille unique et un mode agrafage à cheval, le mode feuille unique étant destiné à transférer un document à feuille unique à travers ledit chemin de transfert, le mode agrafage à cheval étant destiné à transférer le document agrafé à cheval à travers ledit chemin de transfert,
active la fonction de séparation dudit rouleau de séparation dans ledit mode feuille unique, et
désactive la fonction de séparation dudit rouleau de séparation dans ledit mode agrafage à cheval,
et dans lequel le dispositif de lecture de document comprend en outre :
un rouleau de prélèvement (102) pour introduire le document placé sur ledit plateau d'introduction de papier sur ledit chemin de transfert;
un mécanisme de transfert (191, 192, 193) ayant un corps rotatif disposé sur ledit plateau d'introduction de papier de sorte à faire face audit rouleau de prélèvement; et
un dispositif de commande de transfert (151) pour commander ledit mécanisme de transfert, dans lequel
ledit dispositif de commande de transfert
est capable de commander dans l'un parmi ledit mode feuille unique et ledit mode agrafage à cheval,
maintient ledit mécanisme de transfert dans un état arrêté dans ledit mode feuille unique, et
entraîne ledit mécanisme de transfert dans un sens de transfert dans ledit mode agrafage à cheval.
